# EUROPEAN PATENT SPECIFICATION

(11) **EP 1 654 194 B1**
(45) Date of publication and mention of the grant of the patent: **07.03.2007**
(21) Application number: 04740150.0
(22) Date of filing: 22.06.2004
(51) Int. Cl.: C01B 15/023

(54) **PROCESS FOR THE PREPARATION OF HYDROGEN PEROXIDE BY THE ANTHRAQUINONE CYCLIC PROCESS**
VERFAHREN ZUR HERSTELLUNG VON WASSERSTOFFPEROXYD NACH DEM ZYKLISCHEN ANTHRACHINONVERFAHREN
PROCEDE DE PREPARATION DU PEROXYDE D'HYDROGENE PAR LE PROCESSUS CYCLIQUE DE L'ANTHRAQUINONE

(30) Priority: 11.08.2003 DE 10336852
(43) Date of publication of application: 10.05.2006
(73) Proprietor: Degussa GmbH, 40474 Düsseldorf (DE)
(72) Inventor: GOOR, Gustaaf, 63457 Hanau (DE); STAAB, Eugen, 63768 Hösbach (DE); GLENNEBERG, Jürgen, 63065 Offenbach (DE)
(86) International application number: PCT/EP2004/006720
(87) International publication number: WO 2005/014471

(56) References cited:
- EP-A- 1 245 534
- US-A- 3 179 672
- US-A- 3 912 766
- US-A1- 2003 181 741

## Description

The invention is directed at a process for the preparation of hydrogen peroxide by the anthraquinone cyclic process, which includes a working solution regeneration stage. According to the invention the working solution is regenerated by being brought into contact with an aqueous solution containing an alkyl anthrahydroquinone and/or an alkyl tetrahydroanthrahydroquinone in deprotonated form. The working solution regenerated in the regeneration stage is returned to the anthraquinone cyclic process.

### Prior art

In the so-called anthraquinone cyclic process for the preparation of hydrogen peroxide, one or more alkyl anthraquinones and/or alkyl tetrahydroanthraquinones are used as the reactants, from which hydrogen peroxide is formed in the cyclic process. The reactants are used in the form of a solution in a solvent system consisting of one or more water-immiscible solvents. This solution of the reactants is known as the working solution.

In the anthraquinone cyclic process the working solution is hydrogenated with hydrogen or a hydrogen-containing gas in a first stage in the presence of a hydrogenating catalyst, the quinones contained in the working solution being at least partially converted into the hydroquinone form. In a second stage the working solution is reacted with an oxygen-containing gas, e.g. air, the hydroquinones contained in the working solution reacting with oxygen to form hydrogen peroxide with reformation of quinones. In the subsequent third stage the hydrogen peroxide dissolved in the working solution is extracted with water in the form of an aqueous hydrogen peroxide solution. The extracted, oxidized working solution, which in practical terms no longer contains any hydrogen peroxide, is returned to the first hydrogenation stage.

During the cyclic process small amounts of by-products are produced from the reactants, from which as the cyclic process proceeds no more hydrogen peroxide is formed. In the case of working solutions containing alkyl tetrahydroanthraquinones, for example, alkyl tetrahydroanthraquinone epoxides are formed as the most important by-products in terms of quantity. In order to minimize the losses of reactant through by-product formation, the anthraquinone cyclic process is therefore performed with an additional regeneration stage, in which the working solution undergoes a periodic or continuous regeneration treatment, by means of which all or part of the by-products are converted back into active reactants.

A regeneration of the working solution can be achieved by a treatment with alkalizing solids. Suitable alkalizing solids are: Al₂O₃ and MgO, known from US 2,739,875, CaO and Ca(OH)₂, known from GB 838,939, sodium aluminum silicates, known from US 3,055,838, and alkali-treated solids, known from FR 1 305 640. DE 12 73 499 shows that regeneration with a basic solid is more effective with a hydrogenated working solution than with an oxidized working solution. All regeneration processes with a solid regenerant display the disadvantage that acid degradation products contained in the working solution cause the activity of the regenerant to decrease within a short period. The anthraquinone cyclic process can therefore not be performed uniformly with a constant regenerating effect if a solid regenerant is used. Used regenerant must be replaced with fresh regenerant at frequent intervals and disposed of in a procedure that is both cumbersome and very expensive.

It is known from DE-A 11 38 743 that an oxidized and extracted working solution can be regenerated by treatment with oxygen or another oxidizing agent, such as H₂O₂, in the presence of an aqueous solution of a base.

DE-A 12 03 237 describes how oxidized and extracted working solution can also be regenerated in the absence of an oxidizing agent, by treatment with an alkali hydroxide, aqueous lye also being suitable. In column 3, line 29 it is explicitly stated that the recycle solution should be treated after full oxidation to prevent dissolution of the hydroquinones in the aqueous phase.

US 2,901,491 describes how the hydroquinones contained in a hydrogenated working solution are extracted from it in full with sodium hydroxide solution. By oxidizing the aqueous extract with air the extracted hydroquinones can be converted back into the quinones, which then separate out or can be extracted with a solvent. The working solution extracted with sodium hydroxide solution is distilled to recover the solvents contained within it. It follows from column 2, lines 6 to 21, that the residue left behind during distillation of the working solution extracted with sodium hydroxide solution still contains the regenerable constituents of the working solution.

FR 1,342,577 describes the regeneration of working solution with a highly alkaline dithionite solution. The reactants contained in the working solution are extracted almost completely from the organic phase with the alkaline dithionite solution. After phase separation the organic phase is recovered by distillation. The aqueous phase obtained during the treatment is oxidized, e.g. by passing air through it, as a result of which the reactants separate out in the form of quinones. The treatment has a regenerative effect, since after treatment the quantity of quinones obtained was greater than that contained in the working solution used. The disadvantage of the regeneration process, however, is that it consumes large amounts of dithionite and requires an additional distillation stage.

The object of the present invention is to provide an improved process for the preparation of hydrogen peroxide by the anthraquinone cyclic process with a regeneration stage that can be performed simply and with a uniform effect and which can also be used for the regeneration of hydrogenated working solution.

### Subject of the invention

The object is achieved by a process for the preparation of hydrogen peroxide by the anthraquinone cyclic process using a working solution containing as reactant at least one alkyl anthraquinone and/or alkyl tetrahydroanthraquinone, comprising the following stages:
(i) catalytic hydrogenation of the working solution,
(ii) oxidation of the hydrogenated working solution obtained in stage (i) with an oxygen-containing gas,
(iii) aqueous extraction of the hydrogen peroxide from the oxidized working solution obtained in stage (ii)
and return of the extracted working solution obtained in stage (iii) to stage (i),
together with a periodically or continuously performed regeneration stage, which is characterized in that in the regeneration stage working solution is brought into contact with an aqueous regenerating solution L1, containing at least one alkyl anthrahydroquinone and/or alkyl tetrahydroanthrahydroquinone in deprotonated form, then a phase separation into a working solution phase P1 and an aqueous phase P2 is performed and the working solution phase P1 is returned to the anthraquinone cyclic process.

### Detailed description of the invention

The process according to the invention for the preparation of hydrogen peroxide by the anthraquinone cyclic process comprises the following stages in the cyclic process:
(i) catalytic hydrogenation of the working solution,
(ii) oxidation of the hydrogenated working solution obtained in stage (i) with an oxygen-containing gas and
(iii) aqueous extraction of the hydrogen peroxide from the oxidized working solution obtained in stage (ii).
The cycle is completed by the return of the extracted oxidized working solution obtained in stage (iii) to stage (i).

The working solution used in the process contains as reactant one or more alkyl anthraquinones and/or alkyl tetrahydroanthraquinones dissolved in a solvent system consisting of one or more water-immiscible solvents. All alkyl anthraquinones known for the anthraquinone cyclic process can be used as reactants. 2-alkyl anthraquinones, such as e.g. 2-methyl, 2-ethyl, 2-n-propyl, 2-iso-propyl, 2-n-butyl, 2-sec.-butyl, 2-tert.-butyl, 2-iso-sec.-amyl, 2-n-tert.-amyl, 2-neopentyl or 2-(4-methylpentyl) anthraquinone, are preferred. Mixtures of reactants containing alkyl anthraquinones and alkyl tetrahydroanthraquinones side by side are particularly preferably used.

All solvents and solvent combinations known for the anthraquinone cyclic process can be used for the working solution. The solvent system for the working solution preferably includes a non-polar solvent, such as e.g. an aromatic benzine comprising polyalkylated benzenes and a polar solvent that is preferably selected from the series of secondary alcohols, such as e.g. diisobutylcarbinol, esters, such as e.g. methyl cyclohexyl acetate, phosphoric acid esters, such as e.g. tris-(2-ethylhexyl) phosphate, tri- and tetrasubstituted ureas, such as e.g. tetrabutyl urea, pyrrolidones, carbamates and N-alkyl caprolactams, such as e.g. N-octyl caprolactam.

In the hydrogenation stage (i) of the process the working solution is reacted with a hydrogen-containing gas, preferably pure hydrogen, in the presence of a heterogeneous hydrogenating catalyst. During the reaction the reactant(s) are converted in full or in part from the quinone form into the hydroquinone form.

All hydrogenating catalysts known for the anthraquinone cyclic process can be used as catalysts in the hydrogenation stage. Noble metal catalysts containing one or more noble metals from the series Pd, Pt, Ir, Rh and Ru are preferably used. Noble metal catalysts containing palladium as the principal component are particularly preferred. The catalysts can be used in the form of fixed-bed catalysts or in the form of suspended catalysts, suspended catalysts being able to be used both in the form of an unsupported catalyst, e.g. palladium black or Raney nickel, and in the form of a supported suspended catalyst. SiO₂, TiO₂, Al₂O₃ and mixed oxides thereof, as well as zeolites, BaSO₄ or polysiloxanes, are preferably used as support materials for fixed-bed catalysts or supported suspended catalysts. Alternatively, catalysts in the form of monolithic or honeycombed moldings, the surface of which is coated with the noble metal, can also be used.

Hydrogenation is preferably performed continuously, all conventional hydrogenation reactors being able to be used, such as e.g. stirred-tank reactors, tubular-flow reactors, fixed-bed reactors, loop reactors or air-lift pump reactors. The reactors can if necessary be equipped with distribution devices, such as e.g. static mixers or injection nozzles, to distribute the hydrogen in the working solution.

Hydrogenation is preferably performed at a temperature in the range from 20 to 100°C, particularly preferably 45 to 75°C. The pressure is preferably in the range from 0.1 MPa to 1 Mpa (absolute), particularly preferably 0.2 MPa to 0.5 Mpa (absolute). The hydrogenation is preferably performed in such a way that the hydrogen introduced into the hydrogenation reactor is in practical terms entirely consumed in the hydrogenation stage. The amount of hydrogen is preferably chosen so that between 30 and 80 % of the total amount of reactant is converted from the quinone form into the hydroquinone form. If a mixture of alkyl anthraquinones and alkyl tetrahydroanthraquinones is used as the reactant, the amount of hydrogen is preferably chosen so that in the hydrogenation stage only the alkyl tetrahydroanthraquinones are converted into the hydroquinone form and the alkyl anthraquinones remain in the quinone form.

In the oxidation stage (ii) of the process the hydrogenated working solution from stage (i) is reacted with an oxygen-containing gas, preferably with air or with oxygenated air. All oxidation reactors known for the anthraquinone cyclic process can be used for the oxidation. Bubble reactors, through which the oxygen-containing gas and the working solution are passed cocurrently or countercurrently, are preferably used. The bubble reactors can be free from internal devices or preferably contain internal devices in the form of packing or sieve plates. Oxidation is preferably performed at a temperature in the range from 30 to 70°C, particularly preferably 40 to 60°C. Oxidation is preferably performed with an excess of oxygen, so that preferably over 90 %, particularly preferably over 95 %, of the alkyl anthrahydroquinones and alkyl tetrahydroanthrahydroquinones contained in the working solution in hydroquinone form are converted to the quinone form.

In the extraction stage (iii) of the process the oxidized working solution from stage (ii), which contains hydrogen peroxide in dissolved form, is extracted with an aqueous solution to produce an aqueous hydrogen peroxide solution and an extracted oxidized working solution, which in practical terms no longer contains any hydrogen peroxide. Deionized water, which optionally also contains additives for stabilizing hydrogen peroxide, for adjusting the pH and/or for corrosion protection, is preferably used as the extracting agent to extract the hydrogen peroxide. Extraction is performed in an extractor known per se, preferably countercurrently in a continuous extraction column, sieve-plate columns being preferably used.

The process according to the invention also includes a periodically or continuously performed regeneration stage, in which working solution is brought into contact with an aqueous regenerating solution L1 containing at least one alkyl anthrahydroquinone and/or alkyl tetrahydroanthrahydroquinone in deprotonated form. A phase separation is then performed, wherein a regenerated working solution phase P1 and an aqueous phase P2 of the used regenerant are obtained. The regenerated working solution phase P1 is returned to the anthraquinone cyclic process.

Both hydrogenated working solution from stage (i) of the anthraquinone cyclic process and extracted oxidized working solution from stage (iii) of the anthraquinone cyclic process can be regenerated in the regeneration stage according to the invention. Mixtures of hydrogenated working solution from stage (i) and extracted oxidized working solution from stage (iii) can also be regenerated in the regeneration stage according to the invention.

Working solution is preferably removed from the anthraquinone cyclic process between stage (i) and stage (ii) and fed to the regeneration stage and then the regenerated working solution phase P1 is returned to the anthraquinone cyclic process again between stage (i) and stage (ii). In a preferred embodiment of the invention, working solution is continuously removed from the anthraquinone cyclic process in a quantity ranging from 1 to 50 % of the recycle stream, particularly preferably 2 to 20 % of the recycle stream, and the working solution removed is continuously fed to the regeneration stage. The recycle stream refers to the amount of working solution which after passing through stages (i), (ii) and (iii) is fed back to stage (i).

The regenerating solution L1 used in the process according to the invention can be produced by dissolving one or more alkyl anthrahydroquinones and/or alkyl tetrahydroanthrahydroquinones or mixtures thereof in an aqueous, alkalizing solution. The regenerating solution L1 is preferably produced by bringing a hydrogenated working solution into contact with an alkalizing aqueous solution and extracting the reactants contained therein in hydroquinone form in part or in full into the aqueous regenerating solution. Solutions of alkali hydroxides or alkali carbonates are preferably used as alkalizing aqueous solutions, particularly preferably sodium hydroxide solution. The regenerating solution L1 preferably contains the deprotonated alkyl anthrahydroquinones and/or alkyl tetrahydroanthrahydroquinones in a total concentration of at least 0.004 mol/l. If the total concentration is lower, the regeneration takes place more slowly. The maximum concentration of deprotonated alkyl anthrahydroquinones and/or alkyl tetrahydroanthrahydroquinones can be up to the saturation concentration of this compound in the regenerating solution L1.

The working solution and the regenerating solution L1 are preferably brought into contact with one another for regeneration in a volume ratio ranging from 100:1 to 1:5 and particularly preferably ranging from 20:1 to 1:1. Regeneration is preferably performed at a temperature ranging from 20 to 150°C, particularly preferably ranging from 50 to 90°C. Working solution and regenerating solution are preferably brought into contact with one another for regeneration for a period of 0.5 to 100 minutes, particularly preferably 2 to 30 minutes. The working solution and the regenerating solution are preferably mixed together intensively during the regeneration, for example in an agitated tank or by means of a pump and a reaction loop, which optionally also contains internal mixing devices, such as e.g. static mixers. The working solution and regenerating solution L1 are preferably brought into contact in the absence of oxidizing agents, in particular with air excluded, to avoid oxidation of the alkyl anthrahydroquinones and/or alkyl tetrahydroanthrahydroquinones present in the regenerating solution in deprotonated form.

Once the working solution and the regenerating solution have been brought into contact, a phase separation into the working solution phase P1 of the regenerated working solution and the aqueous phase P2 of the used regenerating solution is performed. The phase separation can be performed by any known process for separating or removing two liquid phases. A coalescer, which contains a coalescence-promoting fibrous material, is preferably used for phase separation. A material that is wetted by water and is resistant to aqueous alkaline solutions is preferably used as the coalescence-promoting material. Metallic fiber beds, in particular stainless steel fiber beds, are particularly preferably used as the coalescence-promoting fibrous material. The metallic fiber beds are preferably constructed as nonwoven fabrics, woven fabrics or knitted fabrics, with binder-free rolled or sintered nonwovens being particularly preferred. The coalescence-promoting fibrous material preferably displays fibers having a diameter of 1 to 100 µm, particularly preferably 1 to 80 µm and in particular 2 to 50 µm. The coalescers are preferably constructed in such a way that after passing through a bed made from the coalescence-promoting fibrous material the two-phase mixture is also passed through a woven fabric made from a hydrophobic polymer. Suitable hydrophobic polymers for this purpose are polyolefins, such as e.g. polyethylene or polypropylene, and fluoropolymers, such as e.g. polytetrafluoroethylene or polyvinylidene fluoride. In a particularly preferred embodiment the coalescer comprises cylindrical elements, through which the mixture passes from the inside out and which comprise an inner support core, an outer support fabric made from a hydrophobic polymer and a metallic fiber bed located between them.

All or part of the aqueous phase P2 of the used regenerating solution that is obtained in the regeneration stage following phase separation is preferably returned to the regeneration stage and used for the regeneration of working solution. Through the recycling of regenerating solution, the losses of reactants arising from extraction of reactants into the regenerating solution, principally during the regeneration of hydrogenated working solution, are kept to a minimum.

With the recycling of regenerating solution part of the regenerating solution is preferably eliminated periodically or continuously in order to eliminate acid degradation products from the anthraquinone cyclic process, which dissolve in the regenerating solution, from the process. If regeneration is performed with hydrogenated working solution, an alkalizing aqueous solution, in particular a lye with a concentration of alkali hydroxide ranging from 0.025 to 5 mol/l, is preferably supplied to the regeneration stage in place of the eliminated regenerating solution. Sodium hydroxide solution with a concentration ranging from 0.1 to 2 mol/l is particularly preferably used to replace eliminated regenerating solution. The proportion of regenerating solution that is periodically or continuously eliminated and not returned to the regeneration stage is preferably on average 1 to 60 %, particularly preferably 1 to 10 % of the aqueous phase P2 of the regenerating solution obtained following phase separation.

Reactants dissolved in the used regenerating solution P2 eliminated from the regeneration stage are preferably recovered from it in full or in part and returned to the anthraquinone cyclic process. This can be done for example by oxidation of the eliminated regenerating solution with air or another oxidizing agent followed by filtration or extraction with a solvent, wherein oxidation and extraction can also take place simultaneously. In another embodiment the eliminated regenerating solution is neutralized with an acid and extracted with a solvent.

In a preferred embodiment the regenerating solution eliminated from P2 is extracted with an extracted oxidized working solution in order to recover reactants and this working solution is then returned to the anthraquinone cyclic process. The extraction of eliminated regenerating solution with extracted oxidized working solution is preferably performed in the absence of air. The eliminated regenerating solution and the extracted oxidized working solution are preferably brought into contact with one another in a volume ratio of 1:2 to 1:100, particularly preferably 1:5 to 1:20, in order to recover the reactants from the regenerating solution. Surprisingly, the reactants contained in the eliminated regenerating solution can be extracted selectively with the extracted oxidized working solution, without the addition of an oxidizing agent or an acid, whilst acid degradation products from the anthraquinone cyclic process largely remain in the aqueous regenerating solution and can be eliminated from the process. The working solution used to recover reactants from the eliminated regenerating solution can be returned directly to the anthraquinone cyclic process. In a preferred embodiment, however, it is combined with the working solution phase P1 obtained in the regeneration stage and optionally subjected to other regeneration stages before being returned to the anthraquinone cyclic process.

The working solution P1 of the regenerated working solution obtained in the regeneration stage following phase separation can be returned directly to the anthraquinone cyclic process without further treatment. However, the working solution phase P1 is preferably washed with an acidifying aqueous solution to prevent basic substances from the regeneration stage from entering the anthraquinone cyclic process and leading to disturbances in the cyclic process. Diluted mineral acid solutions, e.g. diluted nitric acid or diluted phosphoric acid, are preferably used as acidifying aqueous solutions for this washing stage. Following washing with an acidifying aqueous solution a further wash with water can optionally also be performed. In order to be able to detect an undesirable entrainment of regenerating solution with the working solution phase P1, the pH can be monitored in the acid wash and/or in a subsequent wash with water. In both the acid wash and in a subsequent wash with water, coalescers can be used to separate the working solution phase from the aqueous phase.

### The following features are combined in the best embodiment:

The working solution to be regenerated is removed between stage (i) and (ii); this working solution is brought into contact with a regenerating solution in the ratio 20:1 to 1:1; 1 to 10 % are eliminated from the aqueous phase P2 and treated with extracted oxidized working solution in order to recover reactants from the aqueous phase to be eliminated from the process.

In addition to the regeneration stage according to the invention, the process according to the invention for the preparation of hydrogen peroxide can also contain a further treatment stage, in which a part of the working solution is periodically or continuously brought into contact with aluminum oxide by known means. Contact is preferably achieved by passing working solution through an aluminum oxide fixed bed, preferably at a temperature in the range from 30 to 90°C. The treatment with aluminum oxide can optionally be performed with oxidized extracted working solution removed from the cyclic process between stage (iii) and stage (i), or with hydrogenated working solution removed from the cyclic process between stage (i) and stage (ii). The treatment with aluminum oxide can take place independently of the regeneration stage according to the invention, i.e. working solution is removed from the anthraquinone cyclic process, regenerated with aluminum oxide and returned to the anthraquinone cyclic process. In another embodiment the treatment with aluminum oxide is combined with the regeneration according to the invention, by supplying the working solution phase P1 obtained in the regeneration stage according to the invention for treatment with aluminum oxide, optionally after acid washing. In a combined application of the process according to the invention with a treatment with aluminum oxide, regardless of whether the regenerated working solution phase P1 is introduced into the recycle stream of the anthraquinone cyclic process or into the treatment stage with aluminum oxide, the aluminum oxide can be used for a longer period before it needs to be replaced with fresh aluminum oxide than is the case in processes that do not include the regeneration stage according to the invention.

### Example 1:

In an experimental plant for the preparation of hydrogen peroxide by the anthraquinone cyclic process a working solution consisting of 0.26 mol/l 2-ethyl anthraquinone and 0.42 mol/l 2-ethyl tetrahydroanthraquinone in a solvent blend consisting of 71 vol.% aromatic benzine (blend of C₉/C₁₀ alkyl aromatics), 20 vol.% tetrabutyl urea and 9 vol.% tris-(2-ethylhexyl) phosphate was circulated continuously through the hydrogenation, oxidation and extraction process stages, the average length of one cycle being 3 h. In the hydrogenation stage 0.31 mol/l 2-ethyl tetrahydroanthraquinone were converted to 2-ethyl tetrahydroanthrahydroquinone.

Following the hydrogenation stage, 12 % of the recycle stream was diverted from the working solution cycle and fed to the regeneration stage. The working solution was mixed with a regenerating solution L1, which had already been recycled several times, in the volume ratio 7:1 and regenerated in a loop reactor at 70°C with an average residence time of 10 min. The two-phase mixture that was obtained was continually withdrawn from the loop reactor and separated by means of a coalescer into a working solution phase P1 and an aqueous phase P2. The aqueous phase P1 was continuously supplied to the loop reactor via a buffer vessel. At two-hourly intervals 0.94 % of the regenerating solution was eliminated from the buffer vessel and replaced with 0.25 N sodium hydroxide solution. This corresponded to an average elimination rate of 1.56 ml of regenerating solution per liter of regenerated working solution.

The working solution phase P1 was washed with an aqueous phosphoric acid solution having a pH between 1 and 2 and then with deionized water, a phase separation via coalescers being performed after each wash. The washed regenerated working solution was returned to the anthraquinone cyclic process ahead of the oxidation stage. Once an operating steady state was reached, the content of the most important by-product 2-ethyl tetrahydroanthraquinone epoxide was analyzed. The working solution supplied to the regeneration stage contained 4.0 g/l of the epoxide. The regenerated working solution returned to the cyclic process from the regeneration stage contained 3.0 g/l epoxide, i.e. 25 % of the epoxide content was regenerated to 2-ethyl tetrahydroanthraquinone in a single passage through the regeneration stage.

### Example 2:

Example 1 was repeated with the following changes: The size of the loop reactor was reduced, so that the average residence time in the regeneration stage was cut to 7.3 min. The elimination of regenerating solution took place at intervals of 30 minutes with an average elimination rate of 4.6 ml of regenerating solution per liter of regenerated working solution. To keep the volume of regenerating solution constant, 8.4 ml 0.25 N sodium hydroxide solution per liter of regenerated working solution were supplied to the buffer vessel. A treatment with aluminum oxide was also performed by removing 12 % of the recycle stream of working solution from the anthraquinone cyclic process after the hydrogenation stage and passing it across a fixed bed with aluminum oxide at 70°C. On reaching an operating steady state the working solution supplied to the regeneration stage according to the invention contained 3.2 g/l epoxide and the regenerated working solution returned to the cycle contained 2.3 g/l epoxide, i.e. 28 % of the epoxide content was converted in the single passage through the regeneration stage.

### Example 3:

Example 1 was repeated with a different working solution, consisting of 0.16 mol/l 2-ethyl anthraquinone, 0.20 mol/l 2-ethyl tetrahydroanthraquinone, 0.14 mol/l 2-amyl anthraquinone and 0.10 mol/l 2-amyl tetrahydroanthraquinone in a solvent blend consisting of 75 vol.% aromatic benzine and 25 vol.% tris-(2-ethylhexyl) phosphate. In the hydrogenation stage of the anthraquinone cyclic process 0.26 mol/l of quinones were converted into hydroquinones.

As in Example 2 the residence time in the regeneration stage was 7.3 min and the elimination of regenerating solution took place at intervals of 30 min. The average elimination rate for regenerating solution was 4.9 ml per liter of regenerated working solution. To keep the volume of regenerating solution constant, 6.1 ml 0.25 N sodium hydroxide solution per liter of regenerated working solution were supplied to the buffer vessel. Over 30 days a constant content of 2-ethyl tetrahydroquinone epoxide of 1.8 g/l and of 2-amyl tetrahydroquinone epoxide of 5.8 g/l became established in the working solution and did not then increase any further, i.e. the formation of epoxides and their conversion by regeneration balanced each other.

### Example 4:

Example 3 was repeated using a continuously operated stirred-tank reactor with an average residence time of 28 min in place of the loop reactor in the regeneration stage. Working solution and regenerating solution were continuously supplied to the stirred-tank reactor in the volume ratio 5:1. The hydrogenated working solution used in the regeneration contained 0.26 wt.% 2-ethyl tetrahydroanthraquinone epoxide and 0.88 wt.% 2-amyl tetrahydroanthraquinone epoxide. After being brought into contact with the regenerating solution the content of 2-ethyl tetrahydroanthraquinone epoxide was 0.17 wt.% and the content of 2-amyl tetrahydroanthraquinone epoxide was 0.82 wt.%. The regenerating solution was continuously eliminated at a rate of 7.5 ml per liter of regenerated working solution. Eliminated regenerating solution was replaced with 0.325 N sodium hydroxide solution.

With air excluded, the regenerating solution eliminated from the regeneration stage from the aqueous phase P2 was continuously brought into contact in the volume ratio 1 : 3.75 with extracted oxidized working solution, which was removed from the anthraquinone cyclic process after the extraction stage, and extracted. Following phase separation the working solution phase was returned to the anthraquinone cyclic process ahead of the hydrogenation stage.

Before extraction with the extracted oxidized working solution the regenerating solution contained 0.30 wt.% 2-ethyl tetrahydroanthrahydroquinone in deprotonated form. Following extraction with the working solution the content of 2-ethyl tetrahydroanthrahydroquinone in the aqueous regenerating solution eliminated from the process was 0.01 wt.%.

Examples 1 to 3 show that the process according to the invention can advantageously be performed with a regeneration of hydrogenated working solution.

Example 4 shows that the reactant dissolved in deprotonated form in the regenerating solution eliminated from the process according to the invention can easily be recovered from it by extraction with extracted oxidized working solution. Surprisingly this selective extraction can also be performed in the absence of acid or of oxidizing agents, such as oxygen or hydrogen peroxide.

## Claims

1. Process for the preparation of hydrogen peroxide by the anthraquinone cyclic process using a working solution containing as reactant at least one alkyl anthraquinone and/or alkyl tetrahydroanthraquinone,
comprising the following stages:
(i) catalytic hydrogenation of the working solution,
(ii) oxidation of the hydrogenated working solution obtained in stage (i) with an oxygen-containing gas,
(iii) aqueous extraction of the hydrogen peroxide from the oxidized working solution obtained in stage (ii)
and return of the extracted working solution obtained in stage (iii) to stage (i),
together with a periodically or continuously performed regeneration stage,
**characterized in that**
in the regeneration stage working solution is brought into contact with an aqueous regenerating solution L1, containing at least one alkyl anthrahydroquinone and/or alkyl tetrahydroanthrahydroquinone in deprotonated form, then a phase separation into a working solution phase P1 and an aqueous phase P2 is performed and the working solution phase P1 is returned to the anthraquinone cyclic process.

2. Process according to claim 1,
**characterized in that**
working solution is removed from the anthraquinone cyclic process between stage (i) and stage (ii), this working solution is supplied to the regeneration stage and the regenerated working solution phase P1 is returned to the anthraquinone cyclic process between stage (i) and stage (ii).

3. Process according to claim 2
**characterized in that**
all or part of the aqueous phase P2 obtained in the regeneration stage is returned to the regeneration stage and used for the regeneration of working solution.

4. Process according to claim 3
**characterized in that**
only part of the aqueous phase P2 obtained in the regeneration stage is returned to the regeneration stage and a lye with a concentration of alkali hydroxide in the range from 0.025 to 5 mol/l is supplied to the regeneration stage in place of the quantity that is not returned.

5. Process according to one or more of the preceding claims,
**characterized in that**
the aqueous regenerating solution L1 contains one or more alkyl anthrahydroquinones and/or alkyl tetrahydroanthrahydroquinones in deprotonated form in a total concentration of at least 0.004 mol/l.

6. Process according to one of the preceding claims,
**characterized in that**
in the regeneration stage the working solution to be regenerated and the aqueous regenerating solution L1 are brought into contact with one another in a volume ratio ranging from 100 : 1 to 1 : 5, in particular ranging from 20 : 1 to 1 : 1.

7. Process according to one of the preceding claims,
**characterized in that**
working solution is continuously removed from the anthraquinone cyclic process in a quantity ranging from 1 to 50 % of the recycle stream, in particular 2 to 20 % of the recycle stream, and supplied to the regeneration stage.

8. Process according to one of the preceding claims,
**characterized in that**
the working solution phase P1 obtained in the regeneration stage is brought into contact with an acidifying aqueous solution before being returned to the anthraquinone cyclic process.

9. Process according to one of the preceding claims,
**characterized in that**
part of the aqueous phase P2 is periodically or continuously eliminated from the regeneration stage, the reactants dissolved in the eliminated portion are recovered in full or in part and the reactants that are recovered are returned to the anthraquinone cyclic process.

10. Process according to claim 9,
**characterized in that**
the recovery of the reactants involves an extraction with a working solution that was removed from the anthraquinone cyclic process between stage (iii) and stage (i).

11. Process according to one of the preceding claims,
**characterized in that**
in the regeneration stage the phase separation is
performed using a coalescer comprising a coalescence-promoting fibrous material.

12. Process according to claim 11,
**characterized in that**
a bed of metallic fibers, preferably stainless steel fibers, is used as the coalescence-promoting fibrous material.

13. Process according to one of the preceding claims,
**characterized in that**
part of the working solution is also periodically or continuously treated by being brought into contact with aluminum oxide.

## Patentansprüche

1. Verfahren zur Herstellung von Wasserstoffperoxid nach dem Anthrachinon-Kreisprozess unter Verwendung einer Arbeitslösung, enthaltend als Reaktionsträger mindestens ein Alkylanthrachinon und/oder Alkyltetrahydroanthrachinon,
umfassend die Stufen
(i) katalytische Hydrierung der Arbeitslösung,
(ii) Oxidation der in Stufe (i) erhaltenen hydrierten Arbeitslösung mit einem Sauerstoff enthaltenden Gas,
(iii) wässrige Extraktion des Wasserstoffperoxids aus der in der Stufe (ii) erhaltenen oxidierten Arbeitslösung
und Rückführung der in Stufe (iii) erhaltenen extrahierten Arbeitslösung in Stufe (i),
sowie eine periodisch oder kontinuierlich durchgeführte Regenerierungsstufe,
**dadurch gekennzeichnet,**
**dass** in der Regenerierungsstufe Arbeitslösung mit einer wässrigen Regenerierlösung L1, enthaltend mindestens ein Alkylanthrahydrochinon und/oder Alkyltetrahydroanthrahydrochinon in deprotonierter Form, in Kontakt gebracht wird, anschließend eine Phasentrennung in eine Arbeitslösungsphase P1 und eine wässrige Phase P2 durchgeführt wird und die Arbeitslösungsphase P1 in den Anthrachinon-Kreisprozess zurückgeführt wird.

2. Verfahren nach Anspruch 1,
**dadurch gekennzeichnet,**
**dass** dem Anthrachinon-Kreisprozess zwischen Stufe (i) und Stufe (ii) Arbeitslösung entnommen wird, diese Arbeitslösung der Regenerierungsstufe zugeführt wird und die regenerierte Arbeitslösungsphase P1 zwischen Stufe (i) und Stufe (ii) in den Anthrachinon-Kreisprozess zurückgeführt wird.

3. Verfahren nach Anspruch 2
**dadurch gekennzeichnet,**
**dass** man die in der Regenerierungsstufe erhaltene wässrige Phase P2 ganz oder teilweise in die Regenerierungsstufe zurückführt und zur Regenerierung von Arbeitslösung verwendet.

4. Verfahren nach Anspruch 3
**dadurch gekennzeichnet,**
**dass** die in der Regenerierungsstufe erhaltene wässrige Phase P2 nur teilweise in die Regenerierungsstufe zurückführt wird und an Stelle der nicht zurückgeführten Menge eine Alkalilauge mit einer Konzentration an Alkalihydrooxid im Bereich von 0,025 bis 5 mol/l der Regenerierungsstufe zugeführt wird.

5. Verfahren nach einem der vorangehenden Ansprüche,
**dadurch gekennzeichnet,**
**dass** die wässrige Regenerierlösung L1 ein oder mehrere Alkylanthrahydrochinone und/oder Alkyltetrahydroanthrahydrochinone in deprotonierter Form in einer Gesamtkonzentration von mindestens 0,004 mol/l enthält.

6. Verfahren nach einem der vorangehenden Ansprüche,
**dadurch gekennzeichnet,**
**dass** man in der Regenerierungsstufe die zu regenerierende Arbeitslösung und die wässrige Regenerierlösung L1 in einem Volumenverhältnis im Bereich von 100 : 1 bis 1 : 5, insbesondere im Bereich von 20 : 1 bis 1 : 1, miteinander in Kontakt bringt.

7. Verfahren nach einem der vorangehenden Ansprüche,
**dadurch gekennzeichnet,**
**dass** dem Anthrachinon-Kreisprozess kontinuierlich Arbeitslösung in einer Menge im Bereich von 1 bis 50 % des Kreislaufstroms, insbesondere 2 bis 20 % des Kreislaufstroms, entnommen und der Regenerierungsstufe zugeführt wird.

8. Verfahren nach einem der vorangehenden Ansprüche,
**dadurch gekennzeichnet,**
**dass** die in der Regenerierungsstufe erhaltene Arbeitslösungsphase P1 mit einer sauer wirkenden wässrigen Lösung kontaktiert wird, bevor sie in den Anthrachinon-Kreisprozess zurückgeführt wird.

9. Verfahren nach einem der vorangehenden Ansprüche,
**dadurch gekennzeichnet,**
**dass** man aus der Regenerierungsstufe periodisch oder kontinuierlich einen Teil der wässrigen Phase P2 ausschleust, die im ausgeschleusten Teil gelösten Reaktionsträger ganz oder teilweise zurückgewinnt und die zurückgewonnenen Reaktionsträger in den Anthrachinon-Kreisprozess zurückführt.

10. Verfahren nach Anspruch 9,
**dadurch gekennzeichnet,**
**dass** die Rückgewinnung der Reaktionsträger eine Extraktion mit einer Arbeitslösung umfaßt, die dem Anthrachinon-Kreisprozess zwischen Stufe (iii) und Stufe (i) entnommen wurde.

11. Verfahren nach einem der vorangehenden Ansprüche,
**dadurch gekennzeichnet,**
**dass** man in der Regenerierungsstufe die Phasentrennung unter Verwendung eines Koaleszers, umfassend ein koaleszenzförderndes faserförmiges Material, durchführt.

12. Verfahren nach Anspruch 11,
**dadurch gekennzeichnet,**
**dass** als koaleszenzförderndes faserförmiges Material ein Bett aus Metallfasern, vorzugsweise Edelstahlfasern, verwendet wird.

13. Verfahren nach einem der vorangehenden Ansprüche,
**dadurch gekennzeichnet,**
**dass** man zusätzlich periodisch oder kontinuierlich einen Teil der Arbeitslösung durch Kontaktieren mit Aluminiumoxid behandelt.

## Revendications

1. Procédé de préparation de peroxyde d'hydrogène par le procédé cyclique à l'anthraquinone utilisant une solution de travail contenant comme réactif au moins une alkylanthraquinone et/ou alkyltétrahydroanthraquinone,
comprenant les étapes suivantes :
(i) hydrogénation catalytique de la solution de travail,
(ii) oxydation de la solution de travail hydrogénée obtenue à l'étape (i) avec un gaz contenant de l'oxygène,
(iii) extraction aqueuse du peroxyde d'hydrogène à partir de la solution de travail oxydée obtenue à l'étape (ii),
et retour à l'étape (i) de la solution de travail extraite obtenue à l'étape (iii),
conjointement avec une étape de régénération effectuée de façon périodique ou continue,
**caractérisé en ce que**
dans l'étape de régénération, la solution de travail est mise en contact avec une solution de régénération aqueuse L1 contenant au moins une alkylanthrahydroquinone et/ou alkyltétrahydroanthrahydroquinone sous forme déprotonée, puis une séparation des phases en une phase de solution de travail P1 et une phase aqueuse P2 est effectuée et la phase de solution de travail P1 est retournée au procédé cyclique à l'anthraquinone.

2. Procédé selon la revendication 1,
**caractérisé en ce que**
la solution de travail est retirée du procédé cyclique à l'anthraquinone entre l'étape (i) et l'étape (ii), cette solution de travail est fournie à l'étape de régénération et la phase de solution de travail régénérée P1 est retournée au procédé cyclique à l'anthraquinone entre l'étape (i) et l'étape (ii).

3. Procédé selon la revendication 2,
**caractérisé en ce que**
tout ou partie de la phase aqueuse P2 obtenue à l'étape de régénération est retournée à l'étape de régénération et utilisée pour la régénération de la solution de travail.

4. Procédé selon la revendication 3,
**caractérisé en ce que**
seule une partie de la phase aqueuse P2 obtenue à l'étape de régénération est retournée à l'étape de régénération et une lessive alcaline avec une concentration d'hydroxyde alcalin dans la gamme de 0,025 à 5 mol/l est fournie à l'étape de régénération à la place de la quantité qui n'est pas retournée.

5. Procédé selon l'une ou plusieurs des revendications précédentes,
**caractérisé en ce que**
la solution de régénération aqueuse L1 contient une ou plusieurs alkylanthrahydroquinones et/ou alkyltétrahydroanthrahydroquinones sous forme déprotonée à une concentration totale d'au moins 0,004 mol/1.

6. Procédé selon l'une des revendications précédentes,
**caractérisé en ce que**
dans l'étape de régénération, la solution de travail à régénérer et la solution de régénération aqueuse L1 sont mises en contact l'une avec l'autre dans un rapport volumique allant de 100:1 à 1:5, en particulier allant de 20:1 à 1:1.

7. Procédé selon l'une des revendications précédentes,
**caractérisé en ce que**
la solution de travail est continuellement retirée du procédé cyclique à l'anthraquinone dans une quantité allant de 1 à 50 % du courant de recyclage, en particulier de 2 à 20 % du courant de recyclage, et fournie à l'étape de régénération.

8. Procédé selon l'une des revendications précédentes,
**caractérisé en ce que**
la phase de solution de travail P1 obtenue à l'étape de régénération est mise en contact avec une solution aqueuse acidifiante avant d'être retournée au procédé cyclique à l'anthraquinone.

9. Procédé selon l'une des revendications précédentes,
**caractérisé en ce que**
une partie de la phase aqueuse P2 est éliminée de façon périodique ou continue de l'étape de régénération, les réactifs dissous dans la partie éliminée sont récupérés en totalité ou en partie et les réactifs qui sont récupérés sont retournés au procédé cyclique à l'anthraquinone.

10. Procédé selon la revendication 9,
**caractérisé en ce que**
la récupération des réactifs implique une extraction avec une solution de travail qui a été retirée du procédé cyclique à l'anthraquinone entre l'étape (iii) et l'étape (i).

11. Procédé selon l'une des revendications précédentes,
**caractérisé en ce que**
dans l'étape de régénération, la séparation des phases est effectuée en utilisant un coalesceur comprenant un matériau fibreux favorisant la coalescence.

12. Procédé selon la revendication 11,
**caractérisé en ce que**
un lit de fibres métalliques, de préférence de fibres d'acier inoxydable, est utilisé comme matériau fibreux favorisant la coalescence.

13. Procédé selon l'une des revendications précédentes,
**caractérisé en ce que**
une partie de la solution de travail est également traitée de façon périodique ou continue en étant mise en contact avec de l'oxyde d'aluminium.
